# EUROPEAN PATENT SPECIFICATION

(11) **EP 2 786 864 B1**
(45) Date of publication and mention of the grant of the patent: **20.07.2016**
(21) Application number: 12852609.2
(22) Date of filing: 13.11.2012
(51) Int. Cl.: B32B 27/18, B32B 27/30, B32B 27/36, C08K 5/00, C08L 33/04, C08L 67/04, C08L 101/16, A61K 8/00

(54) **POLYLACTIC ACID RESIN SHEET AND MOLDED BODY**
POLYMILCHSÄUREHARZFOLIE UND FORMKÖRPER
FEUILLE DE RÉSINE D'ACIDE POLYLACTIQUE ET CORPS MOULÉ

(30) Priority: 30.11.2011 JP 2011261452
(43) Date of publication of application: 08.10.2014
(73) Proprietor: Toray Industries, Inc., Tokyo 103-8666 (JP)
(72) Inventor: YAKUSHIDOU, Kenichi, Otsu-shi Shiga 520-8558 (JP); TABATA, Hisataka, Otsu-shi Shiga 520-8558 (JP); ISHII, Takeshi, Otsu-shi Shiga 520-8558 (JP)
(74) Representative: Prüfer & Partner mbB Patentanwälte · Rechtsanwälte
(86) International application number: PCT/JP2012/079406
(87) International publication number: WO 2013/080788

(56) References cited:
- EP-A1- 2 599 821
- WO-A1-2011/092989
- JP-A- H09 141 803
- JP-A- 2004 067 801
- JP-A- 2005 036 088
- JP-A- 2007 331 154
- JP-A- 2007 331 154
- JP-A- 2008 221 504

## Description

### Technical Field

The invention relates to a polylactic acid based resin sheet that is high in heat resistance, antistatic property, transparency, and blocking resistance, and suitable particularly for production of printed moldings.

### Background Art

In recent years, global warming due to an increase in the concentration of carbon dioxide gas in the atmosphere is becoming a global issue. Active efforts have been made in various industrial fields aiming to develop techniques for reduction in carbon dioxide gas release to the atmosphere. In the field of plastics production, plastic products have been conventionally produced from general-purpose oil-derived input materials, and after use, their waste is processed by incineration, resulting in discharge of carbon dioxide gas into the atmosphere. In recent years, attention is focused on plastics produced from plant-derived materials, which originate in carbon (carbon dioxide gas) in the atmosphere. In particular, research and development have been actively performed towards development of practical polylactic acid based materials, which are generally high in transparency and relatively advantageous in terms of cost as well.

Among other biodegradability plastics, polylactic acid has a relatively high glass transition point of about 57°C as well as high rigidity, and it is now drawing attention as alternatives to materials such as polyethylene terephthalate (PET) and polystyrene (PS). Efforts have been made to develop sheets that are suitable for production of sundry goods, such as clear file folders, and molded food containers.

Polylactic acid, as well as other general polymer compounds, is easily electrified by friction and accordingly suffers from damage to appearance caused by adhered dust or deterioration in processability as a result of electrification that causes blocking between sheets when used in the form of processed sheets.

Generally available methods to make sheets antistatic include coating sheet surfaces with an antistatic agent and kneading an antistatic agent directly into sheets during an extrusion step.

Patent document 1 discloses a technique designed to coat polylactic acid material with an anionic surface active agent and a specific type nonionic surface active agent.

Patent document 2 discloses a technique designed to mix an electrically conductive agent into polylactic acid material.

Patent document 3 discloses a technique designed to mix an anionic surface active agent into polylactic acid material.

Patent document 4 discloses a technique designed to mix an ionic surface active agent and a nonionic surface active agent into polylactic acid.

Polylactic acid is lower in glass transition point by about 20°C than conventional oil-derived materials such as polyethylene terephthalate, and there will be a problem of poor heat resistance if polylactic acid is used as an alternative to an existing material.

Accordingly, mixing or combining a poly(meth)acrylate based resin into or with polylactic acid has been practiced as a method to produce a polylactic acid based resin sheet with heat resistance.

Patent document 5 discloses a technique to achieve improved heat resistance by blending polylactic acid with a polymethyl methacrylate having a molecular weight in a specific range so as to provide a mixture that shows only one glass transition point between the glass transition points of the two resins.

Patent document 6 discloses a technique to produce a laminated sheet in which sheets containing a poly(meth)acrylate based resin at 50 mass% or more account for 0.05 or more of the entire thickness of the sheet.

### Prior Art Documents

### Patent Documents

Patent document 1: Japanese Unexamined Patent Publication (Kokai) No. 2002-12687
Patent document 2: Japanese Unexamined Patent Publication (Kokai) No. 2002-114895
Patent document 3: Japanese Unexamined Patent Publication (Kokai) No. HEI 10-17757
Patent document 4: Japanese Unexamined Patent Publication (Kokai) No. 2004-67801
Patent document 5: Japanese Unexamined Patent Publication (Kokai) No. 2005-171204
Patent document 6: Japanese Unexamined Patent Publication (Kokai) No. 2008-221504

### Summary of the Invention

### Problems to be Solved by the Invention

The technique described in Patent document 1 has some disadvantages. The resulting films tend to have stickiness or suffer from blocking, and coated films will not make good contact with ink and accordingly will not be suitable for printing. The document contains no description on heat resistance.

The technique described in Patent document 2 cannot serve to maintain high transparency which is a good feature of polylactic acid. The document contains no descriptions relating to heat resistance.

The technique described in Patent document 3 is designed to increase the decomposition speed of polylactic acid, and cannot serve for maintaining antistatic property. The document contains no descriptions relating to heat resistance.

The technique described in Patent document 4 can provide films with antistatic property, but they are not sufficiently high in blocking resistance and cannot serve to maintain antistatic property after undergoing a heat history such as thermoforming. The document contains no descriptions relating to heat resistance.

Patent document 5 contains no description relating to the antistatic property of compositions, and compositions produced by the proposed technique will have problems such as electrostatic dust accumulation and of blocking of sheets. Other problems such as inability to maintain transparency may also take place when a generally known antistatic agent is added.

Patent document 6 contains no description relating to the antistatic property of sheets, and the proposed technique will lead to problems such as electrostatic dust accumulation and blocking of sheets. Other problems such as inability to maintain transparency may also take place when a generally known antistatic agent is added.

As described above, it is still impossible for the conventional techniques to provide a polylactic acid based resin sheet that is high in heat resistance, antistatic property, transparency, and blocking resistance, and suitable particularly for production of printed moldings.

Thus, in view of such a prior-art background, the invention aims to provide a polylactic acid based resin sheet that is high in heat resistance, antistatic property, transparency, and blocking resistance, and suitable particularly for production of moldings.

### Means of Solving the Problems

The present invention adopts the following means to solve the problems given above.
1) A polylactic acid based resin sheet having a laminated structure comprising a layer A formed of a composition (A) containing polylactic acid and a layer B formed of a composition (B) containing a poly(meth)acrylate based resin, an ionic surface active agent, and a nonionic surface active agent, the layer B being the outermost layer at at least one surface of the sheet,
   the poly(meth)acrylate based resin accounting for 50 mass% or more and 99.5 mass% or less of the entire 100 mass% of the composition (B), and
   the ionic surface active agent and nonionic surface active agent in the composition (B) having a mass ratio as follows: 2 ≤ ionic surface active agent / nonionic surface active agent ≤ 25.
2) A polylactic acid based resin sheet as described in paragraph 1), wherein the ionic surface active agent has a sulfo group.
3) A polylactic acid based resin sheet as described in either paragraph 1) or 2), wherein the nonionic surface active agent is at least one selected from the group consisting of the compounds listed below.
   Group of compounds: aliphatic alkanol amide, polyglycerin fatty acid ester, higher alcohol (i), alkyl phenol (ii), fatty acid ester (iii), aliphatic amine (iv), aliphatic amide (v), polypropylene glycol (vi), sorbitan fatty acid ester (vii), and ethylene oxide adducts of (i) to (vii).
4) A polylactic acid based resin sheet as described in any one of paragraphs 1) to 3), wherein the total quantity of the ionic surface active agent and nonionic surface active agent accounts for 1 mass% or more and 5 mass% or less of the entire 100 mass% of the composition (B).
5) A polylactic acid based resin sheet as described in any one of paragraphs 1) to 4) that has a haze value of 10% or less.
6) A polylactic acid based resin sheet as described in any one of paragraphs 1) to 5) that has a wetting tension of 40 mN/m or more.
7) A polylactic acid based resin sheet as described in any one of paragraphs 1) to 6), wherein an impact strength modifier is contained at a content of 2 mass% or more and 20 mass% or less relative to the entire 100 mass% of the composition (B).
8) A polylactic acid based resin sheet as described in any one of paragraphs 1) to 7), wherein the polylactic acid contained in the composition (A) is a stereocomplex polylactic acid.
9) A molded product produced from a polylactic acid based resin sheet as described in any one of paragraphs 1) to 8).

### Advantageous Effect of the Invention

The present invention provides a polylactic acid based resin sheet that is high in heat resistance, antistatic property, transparency, and blocking resistance, and suitable particularly for production of printable moldings. Furthermore, moldings produced from the polylactic acid based resin sheet according to the invention are high in heat resistance and antistatic property, and suitable for production of printed moldings such as food containers, clear file folders and clear cases.

### Description of Preferred Embodiments

The polylactic acid based resin sheet according to the present invention is described in detail below. Hereinafter, the term "sheet" refers to a two-dimensional structure such as film and plate.

It is important for the polylactic acid based resin sheet according to the present invention to have a laminated structure comprising a layer A of a composition (A) containing polylactic acid and a layer B of a composition (B) containing a poly(meth)acrylate based resin, an ionic surface active agent, and a nonionic surface active agent.

For example, in the case of a simple monolayer sheet of a composition containing a polylactic acid, a poly(meth)acrylate based resin, an ionic surface active agent, and a nonionic surface active agent, a large amount of a poly(meth)acrylate based resin will be required to develop an adequate level of heat resistance, and it will be impossible to maintain a large content of plant-derived components. If a content of high plant-derived components is to be maintained, on the other hand, the content of the poly(meth)acrylate based resin will be limited and it will be impossible to develop an adequate level of heat resistance.

From the viewpoint of productivity and heat resistance, furthermore, it is important for the layer B of the composition (B) to be the outermost layer at at least one surface of the sheet. It is preferred, however, that a layer B be provided as the outermost layer at each of the surfaces of the laminated sheet, and it is particularly preferable from the viewpoint of depression of curling that the sheet has a three layer structure composed of a layer B, a layer A, and a layer B directly laminated in this order.

In the case where the composition (B) is composed only of a poly(meth)acrylate based resin and an ionic surface active agent or only of a poly(meth)acrylate based resin and a nonionic surface active agent, a surface active agent has to be contained in a large amount to develop an antistatic effect, leading to a sheet with a decreased transparency. It is important, therefore, that the composition (B) constituting the layer B contain a poly(meth)acrylate based resin, an ionic surface active agent, and a nonionic surface active agent.

Here, the expression "a sheet has antistatic property" means that the surface of the sheet which is laminated with a layer B containing a composition (B) has a surface specific resistance of 1 × 10¹² Ω/□ or less.

The fact that the polylactic acid based resin sheet according to the invention has, at at least one surface of the sheet, a layer formed of a composition (B) containing a poly(meth)acrylate based resin, an ionic surface active agent, and a nonionic surface active agent ensures that a relatively small amount of a surface active agent can work effectively, allowing the sheet to have antistatic property while maintaining transparency.

It is important that in the polylactic acid based resin sheet according to the invention, the poly(meth)acrylate based resin account for 50 mass% or more and 99.5 mass% or less of the entire 100 mass% of the composition (B).

The sheet will have a decreased heat resistance if the poly(meth)acrylate based resin accounts for less than 50 mass% of the entire 100 mass% of the composition (B). If the content of the poly(meth)acrylate based resin is more than 99.5 mass% in the entire 100 mass% of the composition (B), on the other hand, the content of the surface active agent will be too small to develop adequate antistatic property.

To maintain a high heat resistance, it is preferable that the content of the poly(meth)acrylate based resin be 80 mass% or more and 99.5% or less in the entire 100 mass% of the composition (B). From the viewpoint of maintaining a high productivity and high plant-derived content for the polylactic acid based resin sheets, it may be effective to add polylactic acid to 10 mass% or more and less than 40 mass% while decreasing the content of the poly(meth)acrylate based resin to 50 mass% or more and 75 mass% or less of the entire 100 mass% of the composition (B). Thus, the content of the poly(meth)acrylate based resin in the composition (B) of the polylactic acid based resin sheet according to the present invention can be adjusted in the range of 50 mass% or more and 99.5 mass% or less to meet specific heat resistance and plant-derived content requirements for a variety of uses. When a polylactic acid is added to the composition (B), there are no specific limitations on it, and useful ones include, for example, homopolylactic acid, stereocomplex polylactic acid, and copolymerization polylactic acid as described later.

For the polylactic acid based resin sheet according to the present invention, it is important for the ionic surface active agent and the nonionic surface active agent in the composition (B) to have a mass ratio as follows: 2 ≤ ionic surface active agent / nonionic surface active agent ≤ 25.

There is a conventional technique that makes a poly(meth)acrylate based resin highly antistatic by adding various surface active agents in large amounts, but it fails to maintain good characteristics, such as transparency, that are inherent in the poly(meth)acrylate based resin. As a result of intensive studies on this problem, the inventors have reached the present invention after finding that a strong antistatic effect can be realized using surface active agents in much smaller amounts than required by the conventional technique if specific surface active agents as given above are added at a specific content ratio. Specifically, as stated above, a highly antistatic layer B which is formed of a composition (B) can be produced by adjusting the mass ratio between the ionic surface active agent and the nonionic surface active agent in the composition (B) in the following range: 2 ≤ ionic surface active agent / nonionic surface active agent ≤ 25. The mechanism that brings about the effect of the invention has not been clarified yet, but it is inferred to be as described below.

Basically, the various surface active agents added to and mixed with a poly(meth)acrylate based resin, and subsequently subjected to melting and molding in some cases, must move towards and bleed to the surface of the molded product over time, thereby making it antistatic. In general, comparison between an ionic surface active agent and a nonionic surface active agent added singly to a poly(meth)acrylate based resin shows that the former is more effective in making it antistatic when added in a relatively small amount, but tends to increase the haze value. For the present invention, it is inferred that the combined use of a relatively large amount of an ionic surface active agent with a relatively small amount of nonionic surface active agent drastically promotes the movement and bleeding of the ionic surface active agent to the surface as compared with the independent use of the ionic surface active agent, serving to make the surface antistatic even in cases where the total amount including the nonionic surface active agent as well is still very small.

From such a point of view as described above, if the mass ratio between the ionic surface active agent and the nonionic surface active agent (ionic surface active agent / nonionic surface active agent) in the composition (B) is smaller than 2, it is necessary to add a large amount of the ionic surface active agent to make the surface antistatic, leading to deterioration in transparency. If the ratio (ionic surface active agent / nonionic surface active agent) is larger than 25, on the other hand, transparency is impaired for a similar reason.

In particular, when the content by mass of the nonionic surface active agent is larger than that of the ionic surface active agent, that is, when the ratio of [ionic surface active agent / nonionic surface active agent] is smaller than 1, the contents of the ionic surface active agent and the nonionic surface active agent will have to be increased to ensure an antistatic property improving effect, possibly leading to deterioration in transparency or defective moldings due to a decrease in melt viscosity during the sheet molding process. Furthermore, nonionic surface active agents are vulnerable to heat, and can cause blocking between sheets that have become sticky after undergoing heat history.

The mass ratio between the ionic surface active agent and the nonionic surface active agent in the composition (B), that is, ionic surface active agent / nonionic surface active agent, is preferably 6 ≤ ionic surface active agent / nonionic surface active agent ≤ 18, more preferably 6 ≤ ionic surface active agent / nonionic surface active agent ≤ 10.

Here, a surface active agent used for the invention is a compound containing a hydrophilic group and a lipophilic group in its molecular chain.

Of the surface active agents defined above, an ionic surface active agent used for the invention is a surface active agent containing a hydrophilic group that releases or acquires an electric charge when dissolved in pure water. The ionic surface active agent to be used may be either a cationic surface active agent or an anionic surface active agent, and may be a mixture of a cationic surface active agent and an anionic surface active agent.

A cationic surface active agent is a surface active agent containing a hydrophilic group that forms a cation in pure water while an anionic surface active agent is a surface active agent containing a hydrophilic group that forms an anion in in pure water.

Of the surface active agents defined above, a nonionic surface active agent used for the invention is a surface active agent containing a hydrophilic group that does not release or acquire an electric charge in pure water.

Hydrophilic groups are functional groups that are easily dissolved in water and can be divided into the following categories: hydrophilic groups form cations in pure water, hydrophilic groups that form anions in pure water, and hydrophilic groups that do not release or acquire an electric charge in pure water.

Specifically, the hydrophilic groups that form cations in pure water include, for example, tertiary amino groups.

Specifically, the hydrophilic groups that form anions in pure water include, for example, sulfo groups and carboxyl groups.

Specifically, the hydrophilic groups that do not release or acquire an electric charge in pure water include, for example, hydroxyl groups and amide groups.

Lipophilic groups are functional groups that are not dissolved easily in water, and specifically, they include alkyl groups, alkenyl groups, cycloalkyl groups, and aryl groups.

In regard to the surface active agents contained in the composition (B) of the polylactic acid based resin sheet according to the present invention, it is preferable that the ionic surface active agent has a sulfo group, and the nonionic surface active agent is at least one selected from the group consisting of the compounds listed below:

Group of compounds: aliphatic alkanol amide, polyglycerin fatty acid ester, higher alcohol (i), alkyl phenol (ii), fatty acid ester (iii), aliphatic amine (iv), aliphatic amide (v), polypropylene glycol (vi), sorbitan fatty acid ester (vii), and ethylene oxide adducts of (i) to (vii).

Preferable examples of the ionic surface active agent containing a sulfo group include, for example, those ionic surface active agents containing a lipophilic groups such as alkyl group and alkyl aryl group and a hydrophilic sulfo group that forms an anion in pure water. The ionic surface active agent containing a sulfo group is preferably an ionic surface active agent with a molecular weight of 1,000 or less, particularly preferably with a molecular weight of 100 or more and 500 or less.

As the ionic surface active agent containing a sulfo group, a metal salt of an alkyl sulfonic acid, for example, is preferred. In the case where the ionic surface active agent containing a sulfo group is a metal salt of an alkyl sulfonic acid, the alkyl group preferably has 11 to 15 carbon atoms from the viewpoint of its antistatic effect. In the case where the ionic surface active agent containing a sulfo group is a metal salt of an alkyl sulfonic acid, furthermore, the metal salt may be a sodium salt, potassium salt, lithium salt, calcium salt, or magnesium salt, of which a sodium salt is preferable. These metal salts of an alkyl sulfonic acid may be used singly or as a combination of two or more thereof.

Described below are compounds used as the nonionic surface active agent for the present invention.

An aliphatic alkanol amide preferred as the nonionic surface active agent can be synthesized through condensation of a higher fatty acid and an alkanol amide. There are no specific limitations on the higher fatty acid to be used, but fatty acids containing 12 to 20 carbon atoms can be used favorably. Specifically, a preferable higher fatty acid is stearic acid. Preferable alkanol amides include diethanol amine, monoethanol amine, and isopropanol amine.

In the higher alcohol (i), alkyl phenol (ii), fatty acid ester (iii), aliphatic amine (iv), and aliphatic amide (v) that are preferred as the nonionic surface active agent, the alkyl group contained preferably has 8 to 22 carbon atoms.

In the ethylene oxide adducts of the compounds (i) to (v) given above that are preferred as the nonionic surface active agent, the number of moles of the ethylene oxide added is commonly 2 to 20 depending on the lipophilic group bonded to it. If the number of moles added is large, they tend to cause deterioration in transparency.

The polypropylene glycol (vi) that is preferred as the nonionic surface active agent is preferably a compound with a molecular weight of 500 to 5,000.

In the ethylene oxide adducts of polypropylene glycol (vi) that is preferred as the nonionic surface active agent, the number of moles of the ethylene oxide added is commonly 2 to 20 depending on the lipophilic group bonded to it.

In a sorbitan fatty acid ester (vii) that is preferred as the nonionic surface active agent, the fatty acid contained preferably has 12 to 18 carbon atoms

In the ethylene oxide adducts of the sorbitan fatty acid ester (vii) that are preferred as the nonionic surface active agent, the number of moles of the ethylene oxide added is commonly 2 to 20 depending on the lipophilic group bonded to it.

The fatty acid in a polyglycerin fatty acid ester that is preferred as the nonionic surface active agent is preferably a compound having 12 to 18 arbon atoms. The glycerin may be a di-, tetra-, or deca-glycerin, of which tetra-glycerin is preferable.

From the viewpoint of the high compatibility with poly(meth)acrylate based resins, an ethylene oxide adduct of an aliphatic amine (iv) is particularly preferable as the nonionic surface active agent.

Furthermore, the ionic surface active agent and/or nonionic surface active agent described above may also be contained in the composition (A), in addition to the composition (B), of the layer A. In particular, the layer B may not able to maintain an antistatic property for 60 days or more if the average thickness of each layer B is less than 0.02 mm. Accordingly, it is preferable to add a surface active agent to the composition (A) as well if the average thickness of each layer B is less than 0.02 mm and also if the sheet produced is stored for 60 days or more before molding. When adding a surface active agent to the composition (A), either an ionic surface active agent or a nonionic surface active agent as listed above may be selected, or both types of surface active agents may be added, and in particular, if antistatic property has to be maintained for a long term, it is preferable to add the same type of surface active agent as that contained in the composition (B) in the same quantity as in the composition (B) or in a larger quantity than in the composition (B) unless it causes deterioration in transparency.

It is preferable that the polylactic acid based resin sheet according to the invention have a haze value of 10% or less. If the haze value is 10% or less, moldings produced from such a polylactic acid based resin sheet can serve preferably as packaging containers and packaging sheets that have good design characteristics such as container content visibility and product appearance. If haze value is more than 10%, on the other hand, the products may be poor in transparency and unsuitable for practical use. If haze value is less than 1%, the sheet products may be liable to suffer from flaws, and products such as packaging containers and packaging sheets produced from such laminated sheets may have poor appearance, and accordingly, the haze value is preferably 1% or more. It is more preferable that the polylactic acid based resin sheet according to the invention has a haze value of 2% or more and 8% or less. The lower limit of the haze value is 1% as described above, but a haze value of about 4% or more is satisfactory for uses requiring transparency, such as packaging containers and packaging sheets.

To maintain a the haze value of 10% or less, it is preferable that the total content of the ionic surface active agent and the nonionic surface active agent is preferably 1 mass% or more and 5 mass% or less in the entire 100 mass% of the composition (B) for the present invention. If the content is in this range, it is possible to maintain both a high antistatic property and a low haze value. From the same point of view, a still more preferable content of the ionic surface active agent and nonionic surface active agent is such that the total quantity of the ionic surface active agent and nonionic surface active agent accounts for 0.5 mass% or more and 2.5 mass% or less of the entire 100 mass%, particularly preferably 0.5 mass% or more and 1.6 mass% or less, of the composition (B).

There are no specific limitations on the entire thickness of the polylactic acid based resin sheet according to the present invention, but it is commonly in the range of 0.1 mm or more and 2.0 mm or less. Commonly, the polylactic acid based resin sheet according to the present invention preferably has an entire thickness in the range of 0.15 mm or more and 0.7 mm or less if it is to be used as material for various containers and blister packs, and in the range of 0.1 mm or more and 0.4 mm or less if it is to be used as material for printed products.

To allow the polylactic acid based resin sheet according to the present invention to be high in heat resistance, antistatic property, haze, and plant-derived content at the same time, it is commonly preferable for each layer B formed of a composition (B) to have an average thickness of 0.01 mm or more and 0.05 mm or less. If each layer B has an average thickness of less than 0.01 mm, the heat resistance may deteriorate or it will be difficult to achieve an adequate antistatic property. If each layer B has an average thickness of more than 0.05 mm, on the other hand, the haze of the entire sheet may deteriorate or the plant-derived content may decrease.

Furthermore, commonly, the ratio of the average thickness of each layer B to the total thickness of the polylactic acid based resin sheet (i.e., [average thickness of each layer B] / [total thickness of polylactic acid based resin sheet]) is preferably in the range of 0.5/10 to 3/10 from the viewpoint of productivity.

It is preferable that at least one of the surfaces of the polylactic acid based resin sheet according to the invention have a wetting tension of 40 mN/m or more. If it is in this range, the sheet will have not only an antistatic property but also an anti-fogging property which works favorably when the sheet is used as material for food containers.

To allow at least one of the surfaces of the polylactic acid based resin sheet according to the invention to have a wetting tension of 40 mN/m or more, the mass ratio between the ionic surface active agent and the nonionic surface active agent in a composition (B) is preferably as follows: 6 ≤ ionic surface active agent / nonionic surface active agent ≤ 18. To allow both antistatic property and anti-fogging property to be developed simultaneously, in particular, a surface of the layer B can have a wetting tension of 40 mN/m or more when the mass ratio between the ionic surface active agent and the nonionic surface active agent in the composition (B) is adjusted in the range of 6 ≤ ionic surface active agent / nonionic surface active agent ≤ 10. Thus, at least one surface consequently has a wetting tension of 40 mN/m or more.

It is important for the polylactic acid based resin sheet according to the present invention to have a layer A formed of a composition (A) that contains polylactic acid. As long as polylactic acid is contained in the composition (A), there are no specific limitations on its content, but the polylactic acid preferably accounts for 50 mass% or more and 100 mass% or less of the entire 100 mass% of the composition (A). This is preferable because a sheet with a high plant-derived content can be obtained.

When used for products requiring a high heat resistance such as caps of hot drink containers, the polylactic acid based resin sheet according to the present invention can show a high heat resistance while maintaining a required level of plant-derived content in the entire sheet if the polylactic acid accounts for 30 mass% or more and 45 mass% or less of the entire 100 mass% of the composition (A). In this case, from the viewpoint of transparency and productivity, it is preferable for the composition (A) to contain a poly(meth)acrylate based resin similar to the one in the composition (B) for the present invention.

The polylactic acid to be used for the invention is defined as one in which L-lactic acid and/or D-lactic acid are included as primary components and the lactic-acid-derived components account for 70 mol% or more and 100 mol% or less of the entire 100 mol% of the monomer components constituting the polylactic acid, and it is preferable to use a homo-polylactic acid that is formed virtually only of L-lactic acid and/or D-lactic acid.

It is preferable that the polylactic acid to be used for the invention be crystalline. A crystalline homo-polylactic acid is defined as one that releases heat of crystal fusion attributed to polylactic acid components when examined by differential scanning calorimetry (DSC) in an appropriate temperature range after adequate crystallization of the homo-polylactic acid by heating. Commonly, a homo-polylactic acid increases in melting point and crystallinity with an increasing optical purity. The melting point and crystallinity of polylactic acid is affected by its molecular weight and the catalysts used for its polymerization, but commonly, a homo-polylactic acid with an optical purity of 98% or more has a melting point of about 170°C and has a relatively high crystallinity. On the other hand, the melting point and crystallinity decreases with a decreasing optical purity. A homo-polylactic acid with an optical purity of 88%, for example, has a melting point of about 145°C, and a homo-polylactic acid with an optical purity of 75% has a melting point of about 120°C. A homo-polylactic acid with an optical purity of less than 70% is generally non-crystalline and does not show a definite melting point.

A polylactic acid to be used for the present invention may be a mixture of a crystalline homo-polylactic acid and an amorphous homo-polylactic acid. In this case, the amorphous homo-polylactic acid may have any appropriate content in a region where it works favorably to realize the advantageous effect of the invention, and when a relatively high heat resistance is required, in particular, at least one polylactic acid component used is a polylactic acid polymer with an optical purity of 95% or more.

The polylactic acid contained in the composition (A) for the present invention may be a stereocomplex polylactic acid. A stereocomplex polylactic acid is a polylactic acid polymer containing crystals formed of pairs of poly-L-lactic acid units and poly-D-lactic acid units as described in, for example, Macromolecules, vol. 20, 904 (1987). A poly-L-lactic acid has a left-handed helical structure while a poly-D-lactic acid, the optical isomer of the former, has a right-handed helical structure. When they are mixed, stereospecific bonding will takes place between the two components to form a crystal structure (stereocomplex) that has higher denseness and rigidity than those crystal structures that are formed from either a poly-L-lactic acid or a poly-D-lactic acid alone, and a polylactic acid with such a crystal structure (stereocomplex) is called a stereocomplex polylactic acid. A stereocomplex polylactic acid has a high melting point as a result of the formation of a stereocomplex structure, and some stereocomplex polylactic acids have a melting point as high as 190°C to 250°C while common poly-L-lactic acids and poly-D-lactic acids have a melting point of 165 to 180°C. The use of a stereocomplex polylactic acid as the polylactic acid to be added to the composition (A) for the present invention is particularly preferable when used for producing products that require high heat resistance such as containers designed for heating in a microwave oven.

There are no specific limitations on the method to be used to produce stereocomplex polylactic acids that can serve for the present invention, and they can be produced by generally known methods such as melt-kneading of a poly-L-lactic acid and a poly-D-lactic acid as described in Japanese Unexamined Patent Publication (Kokai) No. 2006-036808 and block copolymerization of a poly-L-lactic acid and a poly-D-lactic acid as described in Japanese Unexamined Patent Publication (Kokai) No. 2003-238672.

A polylactic acid to be used for the invention commonly has a mass average molecular weight of at least 50,000 or more, preferably 80,000 to 400,000, and more preferably 100,000 to 300,000. The mass average molecular weight referred to here for the present invention is defined as the molecular weight measured by gel permeation chromatography (GPC) using a column consisting mainly of Shodex GPC HFIP-806M and Shodex GPC HFIP-LG connected in series and using a chloroform as solvent, and converted in terms of polymethyl methacrylate (PMMA).

A polylactic acid with a mass average molecular weight of 50,000 or more serves to produce a laminated sheet containing the polylactic acid according to the invention with good mechanical characteristics, and also allow processed products with good mechanical characteristics to be produced from the laminated sheet according to the invention.

The polylactic acid to be used for the invention may be a copolymerized polylactic acid produced by copolymerizing an ester-forming monomer component with an L-lactic acid and/or a D-lactic acid. Examples of the copolymerizable monomer component include hydroxycarboxylic acid such as glycolic acid, 3-hydroxybutyric acid, 4-hydroxybutyric acid, 4-hydroxyvaleric acid, and 6-hydroxycaproic acid; compounds containing two or more hydroxyl groups in one molecule such as ethylene glycol, propylene glycol, butanediol, neopentyl glycol, polyethylene glycol, glycerin, and pentaerythritol; derivatives thereof; compounds containing two or more carboxylic acid groups in one molecule such as succinic acid, adipic acid, sebacic acid, fumaric acid, terephthalic acid, isophthalic acid, 2,6-naphthalene dicarboxylic acid, 5-sodium sulfoisophthalic acid, and 5-tetrabutyl phosphonium sulfoisophthalic acid; and derivatives thereof. It is preferable that these copolymerization components account for 0 mol% or more and 30 mol% or less of the entire 100 mol% of the monomer components constituting the polylactic acid.

There are no specific limitations on the method to be used for producing a polylactic acid, and the available ones include direct polymerization from lactic acid, and ring opening polymerization via a lactide. In the case, for example, where direct dehydration and condensation are carried out for production, a high-molecular weight polymer is obtained by performing azeotropic dehydration and condensation of lactic acid or a mixture of lactic acid and a hydroxycarboxylic acid preferably in the presence of an organic solvent, particularly a phenyl ether based solvent, or particularly preferably by removing water from the solvent distilled out during the azeotropic step to provide a virtually water-free solvent, followed by feeding it back to the reaction system for polymerization. In regard to the ring opening polymerization, it is also known that a high-molecular weight polymer can be produced also by subjecting a cyclic ester intermediate of a hydroxycarboxylic acid, e.g., a cyclic ester intermediate such as lactide and glycolide, to ring opening polymerization under reduced pressure using a catalyst such as tin octylate. Here, a polymer with a smaller lactide content can be produced by, for example, the following methods: the method of controlling the conditions for removal of water and low molecular weight compounds in the organic solvent during heated reflux, the method of deactivating the catalyst after completion of the polymerization reaction to depress depolymerization, and the method of heat-treating the resulting polymer.

When the polylactic acid based resin sheet according to the invention is applied to uses, such as packaging of various industry products, that would require durability for long-term storage, it is preferable that the carboxyl end groups in the polylactic acid account for 0 equivalent/10³ kg or more and 30 equivalents/10³ kg or less, more preferably 20 equivalents/10³ kg or less, and still more preferably 10 equivalents/10³ kg or less, in order to develop a high durability by depressing the strength deterioration of the polylactic acid that may be caused by hydrolysis. If the carboxyl end groups in the polylactic acid account for 30 equivalents/10³ kg or less, the quantity of carboxyl end groups, which can act as autocatalyst for hydrolysis, is maintained at an adequately low level, making it possible to develop practically high durability in many cases, depending on the intended uses.

The methods available to maintain the quantity of carboxyl end groups in a polylactic acid at 30 equivalents/10³ kg or less include, for example, the method of controlling it by using an appropriate catalyst or heat history during the synthesis of the polylactic acid, the method of relaxing the heat history by, for example, decreasing the extrusion temperature or shortening the residence time during the sheet production process, and the method of using a reactive compound to cap the carboxyl end groups.

If a reactive compound is used to cap the carboxyl end group, it is preferable that at least part of the carboxyl end groups in the polylactic acid are capped, and it is more preferable that all of them are capped. The usable reactive compounds include, for example, condensation-reactive compounds such as aliphatic alcohols and amide compounds, and addition-reactive compounds such as carbodiimide compounds, epoxy compounds, and oxazoline compounds, of which addition-reactive compounds are preferable because unnecessary by-products will not be formed in large amounts during the reaction, and in particular, carbodiimide compounds are highly preferable from the viewpoint of reaction efficiency.

There are no specific limitations on the poly(meth)acrylate based resin to be used for the present invention, but it is constituted of at least one monomer selected from the group of acrylates and methacrylates, and it may be a copolymer of two or more of these monomers. The acrylates and methacrylates that serve to constitute such a poly(meth)acrylate based resin include, for example, acrylates such as methyl acrylate, ethyl acrylate, n-propyl acrylate, n-butyl acrylate, cyanoethyl acrylate, and cyanobutyl acrylate, and methacrylates such as methyl methacrylate, ethyl methacrylate, cyclohexyl methacrylate, and 2-hydroxyethyl methacrylate, of which polymethyl methacrylate is preferably used as the poly(meth)acrylate based resin in order to develop a high rigidity at high temperatures.

There are no specific limitations on the method to be used to polymerize or copolymerize these monomers, and a generally known polymerization method such as bulk polymerization, solution polymerization, and suspension polymerization can be used.

If a polymethyl methacrylate is to be used as the poly(meth)acrylate based resin, it is preferable to select a polymethyl methacrylate with a flowability of 1 to 20 g/10 min, more preferably 1.5 to 15 g/10 min, and still more preferably 2 to 10 g/10 min, as measured at 230°C according to JIS K7210 (establishewd in 1999) because it will be high in the compatibility with polylactic acid and also because the differences in viscosity among the layers can be minimized in the laminated sheet production process to thereby reduce the unevenness in viscosity and produce high-quality sheets.

It is preferable for the poly(meth)acrylate based resin to be used for the present invention to have a mass average molecular weight of 20,000 to 500,000, more preferably 100,000 to 200,000. If its mass average molecular weight is less than 20,000, the laminated sheets or moldings produced therefrom may be low in strength while if its mass average molecular weight is more than 500,000, unevenness in viscosity may take place during the laminated sheet production process or the flowability may be low during the production process of moldings.

The polylactic acid based resin sheet according to the invention may contain, as required, generally known antioxidant, ultraviolet ray stabilization agent, color protection agent, delustering agent, deodorant, flame retardant, weathering agent, antioxidant, ion exchange agent, crystal nucleating agent, and color pigment, as well as lubricants including inorganic fine particles, organic particles, and other organic lubricants, unless they impair the effect of the invention. These additives may be added to both the composition (A) and the composition (B) or either of the compositions.

Effective antioxidants include hindered phenolic ones and hindered amine based ones. Effective color pigments include inorganic pigments such as carbon black, titanium oxide, zinc oxide, and iron oxide and organic pigments such as cyanine based ones, styrene based ones, phthalocyanine based ones, anthraquinone based ones, perinone based ones, isoindolinone based ones, quinophtharone based ones, quinacridone based ones, and thioindigo based ones.

If particles are to be added with the aim of producing processed products with improved lubricity and blocking resistance, the effective inorganic particles include fine particles of silicon oxides such as silica; various carbonates such as calcium carbonate, magnesium carbonate, and barium carbonate; various sulfates such as calcium sulfate and barium sulfate; various composite oxides such as kaolin and talc; various phosphates such as lithium phosphate, calcium phosphate, and magnesium phosphate; various oxides such as aluminum oxide, titanium oxide, and zirconium oxide; and various salts such as lithium fluoride.

Preferred organic particles include fine particles of calcium oxalate and terephthalates of calcium, barium, zinc, manganese, and magnesium. Effective crosslinked polymer particles include fine particles of a homopolymer or copolymer produced from vinyl based monomers such as divinylbenzene, styrene, acrylic acid, and methacrylic acid. Other preferred ones include organic fine particles of polytetrafluoroethylene, benzo guanamine resin, thermosetting epoxy resin, unsaturated polyester resin, thermosetting urea resin, and thermosetting phenol resin.

There are no specific limitations on the average particle diameter of the inorganic particles and organic particles, but it is preferably 0.01 to 5 µm, more preferably 0.05 to 3 µm, and most preferably 0.08 to 2 µm. When aiming to providing processed products having a sheet surface with enhanced functions such as improved lubricity blocking resistance, it is preferable to add them only to the composition that constitutes the outmost layer, from the viewpoint of transparency, productivity, and production cost.

The composition (A) and/or the composition (B) of the polylactic acid based resin sheet according to the invention may contain an impact strength modifier at 2 mass% or more and 20 mass% or less in the entire 100 mass% of each composition with the aim of improving the impact resistance. In particular, the composition (B) is often not sufficiently high in impact resistance because it contains a large a quantity of a poly(meth)acrylate based resin, and therefore, it is particularly preferable that an impact strength modifier accounts for 2 mass% or more and 20 mass% or less of the entire 100 mass% of the composition (B).

The content of the impact strength modifier is preferably 2.5 mass% or more and 15 mass% or less in the entire 100 mass% of the compositions that constitute the layers. The impact resistance is improved more with an increasing content of an impact strength modifier, but in many cases, an impact resistance does not bring about a large improvement in impact strength if its content exceeds 20 mass%.

An impact strength modifier as referred to herein is an additive that serves to reduce the brittle characteristics inherent in polylactic acids and poly(meth)acrylate based resins, which are generally brittle and cracked easily. Additives having such an effect include those which, when mixed in polylactic acid and/or poly(meth)acrylate based resin, act to form a sea-island structure in which the polylactic acid and/or poly(meth)acrylate based resin is the sea component while the additive is the island component, with the additive being in the form of dispersed particles commonly smaller than spheres with a diameter of about 10 µm. In this case, it is effective to use a so-called soft additive that has a lower elastic modulus than that of the polylactic acid and/or poly(meth)acrylate based resin.

Specifically, such impact strength modifiers include, for example, ethylene-propylene copolymer, ethylene/propylene-nonconjugated diene copolymer, ethylene-1-butene copolymer, ethylene-acrylic acid copolymer, alkali metal salt thereof (so-called ionomer), ethylene-glycidyl (meth)acrylate copolymer, ethylene-acrylic acid alkyl ester copolymer (for example, ethylene-ethyl acrylate copolymer, and ethylene-butyl acrylate copolymer), acid-modified ethylene-propylene copolymer, diene rubber (for example, polybutadiene, polyisoprene, and polychloroprene), copolymer of a diene and a vinyl monomer (for example, styrene-butadiene random copolymer, styrene-butadiene block copolymer, styrene-butadiene-styrene block copolymer, styrene-isoprene random copolymer, styrene-isoprene block copolymer, styrene-isoprene-styrene block copolymer, polybutadiene graft-copolymerized with styrene, and butadiene-acrylonitrile copolymer), polyester-diols or dicarboxylic acid block copolymer, polyisobutylene, copolymer of isobutylene with butadiene or isoprene, natural rubber, Thiokol rubber, polysulfide rubber, acrylic rubber, silicone rubber, polyurethane rubber, polyether rubber, epichlorohydrin rubber, aliphatic polyester, polyester based elastomer, and polyamide based elastomer.

Furthermore, specific examples of the impact strength modifier include various polymers with different degrees of crosslinking, those of various microstructures such as cis structure and trans structure, and multi-layered structure polymers consisting of a core layer and one or more shell layers that cover the former.

Preferable impact strength modifiers for the composition (A) include aliphatic polyesters other than the polylactic acid (A), and aliphatic aromatic polyesters, because they are dispersed to a preferable degree in polylactic acid and serve effectively in small amounts to enhance the impact strength.

There are no specific limitations on the aliphatic polyesters other than the polylactic acid and aliphatic aromatic polyesters that serve effectively as impact strength modifiers in a composition (A), and specifically they include polyglycolic acid, poly(3-hydroxybutyric acid), poly(4-hydroxybutyric acid), poly(4-hydroxyvaleric acid), poly(3-hydroxyhexanoic acid), polycaprolactone, polyethylene adipate, polyethylene succinate, polybutylene succinate, and polybutylene succinate adipate.

In order to improve the impact resistance while maintaining transparency, furthermore, it is preferable to use a polybutylene succinate based resin, which is an aliphatic polyester other than polylactic acid, as an impact strength modifier. More preferable impact strength modifiers include polybutylene succinate adipate and polybutylene succinate adipate, which serve effectively to enhance the impact resistance and has a high compatibility with polylactic acid.

If a polybutylene succinate is used as the impact strength modifier in the composition (A), it preferably has a mass average molecular weight of 100,000 to 300,000. Products of such a polybutylene succinate based resin include, for example, GSP1a FZ71PD (trade name and product number; manufactured by Mitsubishi Chemical Corporation) and Bionolle #3003 (trade name and product number; Showa Highpolymer Co., Ltd.), and for example, polybutylene succinate can be produced by condensation polymerization of 1-4-butanediol and succinic acid.

Preferable impact strength modifiers to be added to the composition (A) and/or the composition (B) also include multi-layered polymeric ones. This is because such multi-layered structure polymers can show a preferred degree of dispersibility in polylactic acid and/or poly(meth)acrylate based resin and can serve effectively to improve the impact resistance in small amounts.

A multi-layered structure polymer is a polymer with a multi-layered structure that is a so-called core-shell type structure consisting mainly of an innermost layer (core layer) and one or more layers (shell layers) that cover the former, in which adjacent layers are formed of polymers of different species. There are no specific limitations on the number of layers that constitute a multi-layered structure polymer, as long as it is two or more, and accordingly, it may consist of three or more layers or four or more layer. It is preferable that such a multi-layered structure polymer include at least one or more rubber layers in its interior (specifically, preferably has one or more rubber layers which are not the outermost layers).

With respect to the rubber layers, there are no specific limitations on the type of rubber as long as they are formed of a polymer component that has rubber elasticity. Rubber elasticity is defined as the elasticity caused by expansion and contraction of polymer chains.

The multi-layered structure polymer to be contained as an impact strength modifier is preferably a core-shell type acrylic based polymer because it can improve impact resistance while maintaining transparency.

In more detail, the rubbers useful as the rubber layer in a multi-layered structure polymer include, for example, those produced by polymerization of, for example, an acrylic component, silicone component, styrene component, nitrile component, conjugated diene component, urethane component, or ethylene propylene component.

The preferred polymer components of the rubber layer include rubbers produced by polymerization of, for example, acrylic components such as ethyl acrylate unit and butyl acrylate unit; silicone components such as dimethyl siloxane unit and phenyl methyl siloxane unit; styrene components such as silicone unit, styrene unit, and α-methyl styrene unit; nitrile components such as acrylonitrile unit and methacrylonitrile unit; and conjugated diene components such as butadiene unit and isoprene unit. Furthermore, it is also preferable to use a rubber produced by copolymerization of two or more of these components, such as: (1) a rubber composed mainly of a component produced by copolymerization of an acrylic component such as ethyl acrylate unit and butyl acrylate unit and a silicone component such as dimethyl siloxane unit and phenyl methyl siloxane unit; (2) a rubber composed mainly of a component produced by copolymerization of an acrylic component such as ethyl acrylate unit and butyl acrylate unit and a styrene component such as styrene unit and α-methyl styrene unit; (3) a rubber composed mainly of a component produced by copolymerization of an acrylic component such as ethyl acrylate unit and butyl acrylate unit and a conjugated diene component such as butadiene unit and isoprene unit; and (4) a rubber composed mainly of a component produced by copolymerization of an acrylic component such as ethyl acrylate unit and butyl acrylate unit, a silicone component such as dimethyl siloxane unit and phenyl methyl siloxane unit, and a styrene component such as styrene unit and α-methyl styrene unit. It is also preferable to use a rubber produced by copolymerization involving a crosslinkable component such as divinylbenzene unit, allyl acrylate unit, and butylene glycol diacrylate unit, in addition to the above components.

Preferable multi-layered structure polymers include those multi-layered structure polymers consisting of one core layer and one shell layer such as: a multi-layered structure polymer consisting of a core layer formed of a rubber containing a component produced by copolymerization of a dimethyl siloxane unit and a butyl acrylate unit, and a shell layer formed of methyl methacrylate polymer; a multi-layered structure polymer consisting of a core layer formed of a rubber containing a component produced by copolymerization of a butadiene unit and a styrene unit, and a shell layer formed of a methyl methacrylate polymer; and a multi-layered structure polymer consisting of a core layer formed of a rubber containing a component produced by polymerization of a butyl acrylate unit, and a shell layer formed of a methyl methacrylate polymer. Here, it is particularly preferable that the rubber layer is formed of a polymer containing a glycidyl methacrylate unit.

There are no specific limitations on the method to be used to melt-knead polylactic acid and/or poly(meth)acrylate based resin with an impact strength modifier, and common mixers including a kneader, roll mill, Banbury mixer, and uniaxial or twin screw extruder may be used. In particular, it is preferable to use a uniaxial or twin screw extruder from the viewpoint of productivity.

There are no specific limitations on the order of mixing, and for example, polylactic acid and/or poly(meth)acrylate based resin and an impact strength modifier may be dry-blended first and then fed to a melt-kneading machine, or polylactic acid and/or poly(meth)acrylate based resin and an impact strength modifier may be melt-kneaded to prepare a masterbatch, followed by melt-kneading of the masterbatch and polylactic acid. Or, if necessary, other components may be melt-kneaded together, or polylactic acid and/or poly(meth)acrylate based resin and other additives may be melt-kneaded first to prepare a masterbatch, followed by melt-kneading with this masterbatch.

The polylactic acid based resin sheet according to the present invention can be produced by an existing film production method such as T-die casting, inflation molding, and calendaring, of which the use of the T-die casting method for the production is preferable. A typical production process by T-die casting is as follows: drying pellets at 60 to 110°C for 3 hours or more to reduce the moisture content to 400 ppm or less by mass, melt-kneading the pellets in a twin screw extruder with a cylinder temperature in the range of 150°C or more and 240°C or less, extruding the material from a T-die with an orifice temperature in the range of 150°C or more and 240°C or less, and then cooling it using cooling rolls at 30 to 40°C to provide a sheet with a thickness of about 0.1 mm to 2.0 mm. In this case, the cylinder temperature and the orifice temperature are preferably controlled in the range of 200°C or more and 220°C or less from the viewpoint of depressing the heat degradation of the material. When a stereocomplex polylactic acid is used, on the other hand, the stereocomplex crystals have to be melted, and the it is preferable in this case that the cylinder temperature and the orifice temperature are preferably in the range of not lower than the melting point of the stereocomplex crystals and lower than the temperature that is higher by 20°C than the melting point of the stereocomplex crystals.

When a stereocomplex polylactic acid is used, it is possible to perform heat treatment in the production process for the polylactic acid based resin sheet according to the present invention, and a heat treatment step using a hot air oven may be included in order to increase the content of stereocomplex crystals.

The polylactic acid based resin sheet according to the present invention may be subjected to various surface treatments with the aim of improving the coating suitability. The available surface treatment methods include corona discharge treatment, plasma treatment, flame treatment, and acid treatment.

The methods available for producing moldings from the polylactic acid based resin sheet according to the present invention include various forming processes such as vacuum forming, vacuum air-pressure forming, plug-assist forming, straight forming, free draw forming, plug and ring forming, and skeleton forming. For the preheating of the sheet in these various forming methods, indirect heating and hot plate direct heating are available: the indirect heating method preheats a sheet using a heating apparatus located at a position away from the sheet, and the hot plate direct heating method preheats a sheet by bringing the sheet in contact with a hot plate. The polylactic acid based resin sheet according to the present invention can be used preferably for vacuum molding by hot plate direct heating and vacuum air-pressure forming by hot plate direct heating.

Specifically, when a generally known sheet coated with a layer having antistatic property and anti-fogging property is heated by hot plate direct heating, the coat layer can be transferred to the hot plate during the sheet heating step, possibly leading to deterioration in the antistatic property and anti-fogging property. When the polylactic acid based resin sheet according to the present invention is used, on the other hand, even if the surface active agent in the sheet surface layer is transferred to the hot plate during the hot plate direct heating step, the surface active agent will tend to bleed out of the interior of the sheet, thereby providing moldings moldings that will show antistatic and anti-fogging properties during the use thereof.

Moldings produced from the polylactic acid based resin sheet according to the present invention can serve favorably as different products including, for example, container-related products such as molded food containers and lids of beverage cups, various container packaging materials such as blister pack, and other various products that need to have antistatic or antifogging properties.

The polylactic acid based resin sheet and/or moldings according to the present invention may be subjected to various processing steps such as printing. After being printed, for example, the polylactic acid based resin sheet according to the present invention can serve favorably to provide various containers, blister packs, cards, clear file folders, and clear cases. If clear in the unprinted state, the polylactic acid based resin sheet according to the present invention can be printed by an existing printing machine, and, because of being high in antistatic property though being transparent, can be particularly favorable as material for clear cases, desktop calendar cases, and clear file folders. After being colored in white or other colors by generally known methods, on the other hand, the polylactic acid based resin sheet and/or moldings according to the present invention can be used favorably to produce various cards. There are no specific limitations on the position of the print processing step in the process, and when a molding step of the polylactic acid based resin sheet is included, the print processing step may be performed either before the molding processing or after the molding processing.

### Examples

The present invention will be illustrated below in greater detail with reference to Examples, but it should be understood that the invention is not construed as being limited thereto.

### [Measurement and evaluation methods]

Measurements and evaluations described in Examples were carried out under the following conditions.

### (1) Layer thickness ratio

A cross section of a sheet was photographed in transmitted light using a metallographic microscope (Leica DMLM, manufactured by Leica Microsystems GmbH) at a magnification of x100 to determine the thickness of each layer and the thickness ratio among the layers.

### (2) Thickness of sheets (mm)

The thickness of a sheet was measured with a microgauge at 10 points aligned in the width direction, and the average t (mm) of the thickness measurements was taken to represent the thickness of the sheet.

### (3) Content (mass%) of poly(meth)acrylate based resin in composition (B)

The content of the poly(meth)acrylate based resin was calculated from its blending quantity fed to the production process.

### (4) Mass ratio of surface active agents in composition (B)

The ratio was calculated from the quantities of the ionic surface active agent and nonionic surface active agent fed to the production process.

### (5) Contents of surface active agents in composition (B)

The contents of the surface active agents in composition (B) were calculated from their blending quantities fed to the production process.

### (6) Heat resistance: heat resistant temperature (°C)

Using a small type vacuum molding machine with a mold (semicylinder) designed for dummy beverage cans with a diameter of 70 mm and a height of 130 mm (Forming 300X manufactured by Seikosangyo Co., Ltd.), a sheet specimen with a width of 320 mm and a length of 460 mm was subjected to preheating and molding under temperature conditions where the sheet temperature were maintained in the range of 90°C to 110°C during the molding step, and the resulting molded product was left for 2 hours in a constant temperature controlled at 50°C, 55°C, 60°C, 65°C, 70°C, 75°C, or 80°C. The upper limit of the temperature range where the molded product remained undeformed was taken as the heat resistant temperature.

### (7) Antistatic property: surface specific resistance (Ω/□)

Using Resistivity Chamber and a digital ultra-high resistance/subpico ammeter manufactured by ADC Corporation, the surface specific resistance of a polylactic acid based resin sheet was measured according to JIS-K 6911 (established in 1962) in an atmosphere at a temperature of 23°C and a humidity of 65% . The test was carried out three times for each specimen, and the three measurements were averaged.

### (8) Blocking resistance

Ten A4-size specimens were cut out from a polylactic acid based resin sheet. The ten sheet specimens were put one on top of another, and a load of 200 g/cm² was applied, followed by leaving them to stand for 24 hours in an atmosphere at 40°C. Then, each sheet specimen was pulled up from the pile and subjected to surface observation.
○: Free of blocking. It was easy to pull up each sheet specimen separately.
×: Suffering from blocking. The sheet specimens came up by a few at a time.

### (9) Transparency: haze value (%)

A haze meter (HGM-2DP, manufactured by Suga Test Instruments Co., Ltd.) was used to measure the haze value. The test was carried out five times for each specimen, and the five measurements were averaged.

### (10) Wetting tension (mN/m)

According to JIS-K 6768 (1999), various liquid mixtures for wetting tension test (manufactured by Wako Pure Chemical Industries, Ltd.) were applied with a cotton swab over width 1 cm × length 6 cm portions of the surface of the polylactic acid based resin sheet coated with the layer B. The state of the coating liquid was observed in two seconds after coating, and the wetting tension of the sheet was determined from the observation. In the case where both surfaces were coated with a layer B, the wetting tension was determined for both surfaces and the larger wetting tension measurement was adopted.

### (11) Anti-fogging property

A polylactic acid based resin sheet was preheated for 1 sec between the upper and lower hot plates maintained at a temperature of 85°C in a vacuum molding machine of the batch-wise hot plate direct heating type. A female die was pressed against the sheet specimen and the interior was decompressed to produce a molded product in the form of a container lid with a size of about 9 cm (longitudinal) × about 12 cm (transverse) × about 2.5 cm (height). Here, the sheet was processed so that the layer B would form the inner wall of the container lid. A container bottom paired with the container lid was prepared elsewhere, and 100 ml of water at 25°C was poured, followed by placing the molded lid and storing it in an atmosphere at 5°C for 24 hours. Subsequently, the fogging water droplets formed on the lid were observed, and evaluation was made according to the following criteria.
○: Water droplets formed on the surface are connected to each other to form a film, leading to high content visibility.
Δ: Separate fine water droplets are found in some portions, leading to poor content visibility.
×: Separate fine water droplets spread over the entire surface, making the bottom invisible.

### (12) Printability: ink adhesion

An ultraviolet curable ink (UV STP Indigo, manufactured by T&K Toka Corporation) was spread over the layer B on a polylactic acid based resin sheet by the roll coating method to form an ink layer with a thickness of about 2 µm. Subsequently, a specimen was prepared by applying ultraviolet rays with an irradiation intensity of 80 W/cm² for 8 seconds from a distance of 9 cm to cure the ink.

The adhesion between the polylactic acid based resin sheet and the ink was evaluated based on the crosscut tape peeling test according to JIS-K 5600 (established in 1999). Seven parallel lines at intervals of 7 mm were drawn in the longitudinal and the transverse direction (perpendicular to each other) on a specimen using a box-cutter to produce 36 squares on a grid. A pressure sensitive adhesive tape (Cellotape (registered trademark), 24 mm wide, manufactured by Nichiban Co., Ltd.) was applied over these squares, and uniform adhesion was assured. Then, the pressure sensitive adhesive tape was peeled off instantaneously, and the peeled state of the ink layer on the specimen was observed. Evaluation was made as follows based on the proportion of the squares left unpeeled.
: 90% or more.
: less than 90%.

### (13) Impact resistance: impact value (N·m/mm)

A film impact tester (manufactured by Toyo Seiki Seisaku-sho, Ltd.) was used with a hemispherical impact head with a diameter of 1/2 inch to measure the impact value in an atmosphere with a temperature of 23°C and humidity of 65%RH. Film specimens of 100 mm × 100 mm were prepared and five measurements were made on each specimen. Then, each measured impact value was divided by the thickness of the specimen under test to calculate the impact value per unit thickness, and the five measurements were averaged. The thickness of the specimens was measured with a digital micrometer.

### (14) Total plant-derived content of sheet (mass%)

The polylactic acid content in the entire sheet was calculated from its blending quantity fed to the production process.

### [Polylactic acid used]

(PLA-1):
   Polylactic acid (manufactured by NatureWorks, trade name NatureWorks 4042D, L-form/D-form = 96/4)
(PLA-2):
   Polylactic acid (manufactured by NatureWorks, trade name NatureWorks 4032D, L-form/D-form = 99/1)
(PLA-3):
   A flask containing 48.75 g of L-lactide (manufactured by Musashino Chemical Laboratory, Ltd.) and 1.25 g of D-lactide (manufactured by Musashino Chemical Laboratory, Ltd.) was purged with nitrogen gas, and then 0.05 g of stearyl alcohol and 25 mg of tin octylate (used as catalyst) were added, followed by polymerization at 190°C for 2 hours to produce a poly-L-lactic acid. Elsewhere, the same production procedure as for the poly-L-lactic acid was carried out except for using 1.25 g of L-lactide (manufactured by Musashino Chemical Laboratory, Ltd.) and 48.75 g of D-lactide (manufactured by Musashino Chemical Laboratory, Ltd.) to provide a poly-D-lactic acid. The resulting poly-L-lactic acid and poly-D-lactic acid was mixed at a ratio of 1: 1 by mass to provide PLA-3. When heat-treated, PLA-3 forms stereocomplex crystals.
(PLA-4):
   In a flask, 50 g of L-lactide (manufactured by Musashino Chemical Laboratory, Ltd.) was melted uniformly in a nitrogen atmosphere at 120°C and heated to a temperature of 150°C, and then 0.05 g of tin octylate was added, followed by polymerization for 30 minutes to provide a poly-L-lactic acid. Elsewhere, the same production procedure as for the poly-L-lactic acid was carried out except for using D-lactide (manufactured by Musashino Chemical Laboratory, Ltd.) to provide a poly-D-lactic acid. In regard ro the resulting poly-L-lactic acid and poly-D-lactic acid, 50 parts by mass of each polylactic acid and 0.1 part by mass of tin octylate were supplied to a vented twin screw extruder, melt-kneaded (residence time 2 min) at 220°C under a reduced pressure, and pelletized by a strand cutter to provide pellets of a polylactic acid mixture composed of the poly-L-lactic acid and poly-D-lactic acid. The resulting polylactic acid mixture pellets was put in a vacuum dryer to perform reaction for 20 hours at 140°C under a pressure of 13.3 Pa and for an additional 30 hours at 180°C to provide PLA-4. When heat-treated, PLA-4 forms stereocomplex crystals.

### [Poly(meth)acrylate based resin used]

(PM-1):
   Polymethyl methacrylate (manufactured by Asahi Kasei Chemicals Corporation, trade name Delpet 80NH)
(PM-2):
   Polymethyl methacrylate (manufactured by Sumitomo Chemical Co., Ltd., trade name Sumipex LG21)
(PM-3):
   Polymethyl methacrylate (manufactured by Sumitomo Chemical Co., Ltd., trade name Sumipex HT03Y, containing 40 mass% of a rubber component as impact strength modifier)

### [Impact strength modifier used]

(SP-1):
   Polybutylene succinate (manufactured by Mitsubishi Chemical Corporation, trade name GsPla FZ71PD)
(SP-2):
   The core-shell type acrylic based polymer used was Paraloid BPM500 (trade name) manufactured by Rohm and Haas Japan K.K. (consisting of core layer of butyl acrylate polymer and shell layer of methyl methacrylate polymer).

### [Ionic surface active agent used]

(ISA-1):
   Sodium alkyl sulfonate (trade name Chemistat 3033, manufactured by Sanyo Chemical Industries Ltd.)
(ISA-2):
   Lithium alkyl benzene sulfonate (trade name Elecut S-417, manufactured by Takemoto Oil & Fat Co., Ltd.)

### [Nonionic surface active agent used]

(NISA-1):
   Higher fatty acid amide (trade name Elecut S-154, manufactured by Takemoto Oil & Fat Co., Ltd.)
(NISA-2):
   Polyglycerin fatty acid ester (trade name Poem J-40481V, manufactured by Riken Vitamin Co., Ltd.)
(NISA-3):
   Ethylene oxide adduct of aliphatic amine (trade name Electrostripper TS9B, manufactured by Kao Corporation)
(NISA-4):
   Sorbitan fatty acid ester (trade name Poem S-250, manufactured by Riken Vitamin Co., Ltd.)
(NISA-5):
   Fatty acid amine (trade name Amine 2C, manufactured by Lion Akzo Co., Ltd.)
(NISA-6):
   Polyoxyethylene glycerin monostearate (trade name Poem S-105, manufactured by Riken Vitamin Co., Ltd.)

### [Other components used]

(S-MB):
   Master batch (silica particles 10 mass%, PLA-1 90 mass%) of silica particles (average particle diameter 3.2 µm) and PLA-1
(TO-MB):
   Master batch (titanium oxide 25 mass%, PLA-1 75 mass%) of titanium oxide (anatase type titanium oxide, average particle diameter 0.2 µm) and PLA-1

### [Surface active agent used for coating]

(AS-1):
   Aqueous solution of sucrose fatty acid ester (trade name Rikemal A, manufactured by Riken Vitamin Co., Ltd.)

### [Preparation of polylactic acid based resin sheet]

### (Example 1)

A polylactic acid resin, poly(meth)acrylate based resin, impact strength modifier, ionic surface active agent, nonionic surface active agent, and other components as listed in Table 1, fed at mass% proportions as given in Table 1, were supplied to separate vented twin screw extruders, melt-kneaded while being deaerated from the vacuum vent portion, co-extruded from a T-die orifice with an orifice temperature set at 210°C, and discharged into between a pair of a casting drum and a polishing roll that were cooled at 40°C and rotated in the direction of mutual contact so that the material was cooled and solidified by being brought in close contact with the casting drum, thereby preparing an unstretched polylactic acid based resin sheet with a thickness as specified in Table 1. The resulting sheet was wound up by a winder. Results of evaluation of the sheet thus prepared are shown in Table 1.

### (Examples 2 to 10, and Comparative examples 1 to 7)

A polylactic acid resin, poly(meth)acrylate based resin, impact strength modifier, impact strength modifier, ionic surface active agent, nonionic surface active agent, and other components as listed in Table 1 were mixed and fed according to the types and contents shown in Table 1. Except for this, the same procedure as in Example 1 was carried out to produce a polylactic acid based resin sheet. Results of evaluation of the sheets thus prepared are shown in Table 1.

### (Examples 11 to 12)

A polylactic acid resin, poly(meth)acrylate based resin, impact strength modifier, impact strength modifier, ionic surface active agent, nonionic surface active agent, and other components as listed in Table 1, mixed at altered mass% proportions as given in Table 1, were supplied to separate vented twin screw extruders, melt-kneaded while being deaerated from the vacuum vent portion, co-extruded from a T-die orifice with an orifice temperature set at 230°C, and discharged into between a pair of a casting drum and a polishing roll that were cooled at 40°C and rotated in the direction of mutual contact so that the material was cooled and solidified by being brought in close contact with the casting drum, followed by heat treatment in a hot air oven at 160°C for 20 seconds to thereby provide a polylactic acid based resin sheet. Results of evaluation of the sheets thus prepared are shown in Table 1.

### (Comparative example 8)

A polylactic acid resin, poly(meth)acrylate based resin, impact strength modifier, impact strength modifier, ionic surface active agent, nonionic surface active agent, and other components as listed in Table 1 were mixed and fed according to the altered types and contents shown in Table 1, and processed by one vented twin screw extruder for production of a monolayer sheet composed only of a composition (A). Except for this, the same procedure as in Example 1 was carried out to produce a polylactic acid based resin sheet. Results of evaluation of the sheet thus prepared are shown in Table 1.

### (Comparative example 9)

A polylactic acid resin, poly(meth)acrylate based resin, impact strength modifier, impact strength modifier, ionic surface active agent, nonionic surface active agent, and other components as listed in Table 1 were mixed and fed according to the altered types and contents shown in Table 1, and processed by one vented twin screw extruder for production of a monolayer sheet composed only of a composition (B). Except for this, the same procedure as in Example 1 was carried out to produce a polylactic acid based resin sheet. Results of evaluation of the sheet thus prepared are shown in Table 1.

### (Comparative example 10)

A polylactic acid resin, poly(meth)acrylate based resin, impact strength modifier, impact strength modifier, ionic surface active agent, nonionic surface active agent, and other components as listed in Table 1 were mixed and fed according to the altered types and contents shown in Table 1. Except for this, the same procedure as in Example 1 was carried out to produce a polylactic acid based resin sheet. Subsequently, each of the surfaces was subjected, one by one, to corona treatment, coated, one by one, with an aqueous coating liquid containing a surface active agent AS-1 designed for coating using a rotogravure roll coater, and dried in a drying furnace to form a surface active agent coated layer designed to finally have a coating weight as specified in Table 1. Then the coated sheet was wound up by a winder. Results of evaluation of the sheet thus prepared are shown in Table 1.

**[Table 1-1]**

| | | | Example 1 | Example 2 | Example 3 | Fxample 4 | Example 5 | Example 6 | Example 7 | Example 8 | Example 9 | Example 10 | Example 11 | Example 12 |
|---|---|---|---|---|---|---|---|---|---|---|---|---|---|---|
| Layer A | polylactic acid | material used | PLA-1 | PLA-1 | PLA-2 | PLA-2 | PLA-1 | PLA-1 | PLA-2 | PLA-1 | PLA-1 | PLA-2 | PLA-3 | PLA-4 |
| | | content (mass%) | 91 | 100 | 42 | 80 | 78.5 | 91 | 100 | 75 | 100 | 70 | 91 | 91 |
| | poly(meth)acrylate based resin | material used | - | - | PM-3 | - | - | - | - | - | - | - | - | - |
| | | content (mass%) | - | - | 58 | - | - | - | - | - | - | - | - | - |
| | impact strength modifier | material used | SP-2 | - | - | - | SP-2 | SP-2 | - | SP-1 | - | SP-1 | SP-2 | SP-2 |
| | | content (mass%) | 9 | - | (23.2) | - | 20 | 9 | - | 25 | - | 10 | 9 | 9 |
| | ionic surface active agent | material used | - | - | - | - | ISA-1 | - | - | - | - | - | - | - |
| | | content (mass%) | - | - | - | - | 1.3 | - | - | - | - | - | - | - |
| | nonionic surface active agent | material used | - | - | - | - | NISA-1 | - | - | - | - | - | - | - |
| | | content (mass%) | - | - | - | - | 0.2 | - | - | - | - | - | - | - |
| | other components | material used | - | - | - | TO-MB | - | - | - | - | - | TO-MB | - | - |
| | | content (mass%) | - | - | - | 20 | - | - | - | - | - | 20 | - | - |
| Layer B | poly(meth)acrylate based resin | material used | PM-1 | PM-1 | PM-3 | PM-1 | PM-2 | PM-1 | PM-3 | PM-2 | PM-1 | PM-2 | PM-1 | PM-1 |
| | | content (mass%) | 55 | 65 | 98.5 | 55 | 98.5 | 55 | 99 | 85 | 65 | 91.3 | 55 | 55 |
| | polylactic acid | material used | PLA-1 | PLA-1 | - | PLA-2 | - | PLA-1 | - | PLA-1 | PLA-1 | - | PLA-1 | PLA-1 |
| | | content (mass%) | 31.5 | 15.9 | - | 22.5 | - | 34 | - | 12.5 | 20.9 | - | 31.5 | 31.5 |
| | impact strength modifier | material used | SP-2 | SP-2 | - | SP-2 | - | SP-2 | - | - | SP-2 | SP-2 | SP-2 | SP-2 |
| | | content (mass%) | 9 | 17.5 | (39.4) | 22.5 | - | 9 | (39.6) | (34) | 9 | 3 | 9 | 9 |
| | ionic surface active agent | material used | ISA-1 | ISA-1 | ISA-1 | ISA-1 | ISA-1 | ISA-1 | ISA-1 | ISA-2 | ISA-2 | ISA-2 | ISA-1 | ISA-1 |
| | | content (mass%) | 1.3 | 1.3 | 1.3 | 1.1 | 1.3 | 1.9 | 0.7 | 1.8 | 3.5 | 0.6 | 1.3 | 1.3 |
| | nonionic surface active agent | material used | NISA-1 | NISA-3 | NISA-3 | NISA-2 | NISA-1 | NISA-1 | NISA-1 | NISA-4 | NISA-5 | NISA-6 | NISA-1 | NISA-1 |
| | | content (mass%) | 0.2 | 0.3 | 0.2 | 0.2 | 0.2 | 0.1 | 0.3 | 0.7 | 1.6 | 0.1 | 0.2 | 0.2 |
| | other component | material used | S-MB | - | - | - | - | - | - | - | - | S-MB | S-MB | S-MB |
| | | content (mass%) | 3 | - | - | - | - | - | - | - | - | 5 | 3 | 3 |
| Coating agent | | coating material used | - | - | - | - | - | - | - | - | - | - | - | - |
| | | coating weight (g/m²) | - | - | - | - | - | - | - | - | - | - | - | - |
| Layer structure (example: 3 layer structure of layer B/layer A/layer A is shown as B/A/B.) | | | B/A/B | B/A/B | B/A/B | B/A/B | B/A/B | B/A/B | B/A | B/A/B | B/A/B | B/A | B/A/B | B/A/B |
| Layer thickness ratio | | | 1/8/1 | 1/8/1 | 2/6/2 | 2/6/2 | 1/8/1 | 0.5/9/0. 5 | 1/9 | 1/8/1 | 1/8/1 | 5/5 | 1/8/1 | 1/8/1 |
| Sheet thickness (mm) | | | 0.30 | 0.30 | 0.50 | 0.25 | 0.20 | 1.10 | 0.30 | 0.80 | 0.30 | 0.60 | 0.30 | 0.30 |

**[Table 1-2]**

| | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|
| Content of poly(meth)acrylate based resin in composition (B) (mass%) | 55.0 | 65.0 | 59.0 | 55.0 | 98.0 | 55.0 | 59.4 | 51.0 | 65.0 | 91.3 | 55.0 | 55.0 |
| Mass ratio of surface active agent in composition (B) = ionic surface active agent (mass%) / nonionic surface active agent (mass%) | 6.5 | 4.3 | 6.5 | 5.5 | 6.5 | 19.0 | 2.3 | 2.6 | 2.2 | 6.0 | 6.5 | 6.5 |
| Content of surface active agent in composition (B) (mass%) = ionic surface active agent (mass%) + nonionic surface active agent (mass%) | 1.5 | 1.6 | 1.5 | 1.3 | 1.5 | 2.0 | 1.0 | 2.5 | 5.1 | 0.7 | 1.5 | 1.5 |
| Content of impact resistant agent in the the composition (B) (mass%) | 9 | 17.5 | 39.4 | 22.5 | 0 | 9 | 39.6 | 34 | 9 | 3 | 9 | 9 |
| Heat resistance as heat resistant temperature (°C) | 70 | 75 | ≥80 | 75 | ≥80 | 75 | 60 | 70 | 75 | 60 | ≥80 | ≥80 |
| Antistatic property as surface specific resistance (Ω/□) | 4.0×10¹⁰ | 6.2×10¹⁰ | 7.7×10¹⁰ | 4.9×10¹¹ | 5.8×10¹⁰ | 6.5×10¹⁰ | 9.7×10¹¹ | 8.0×10⁹ | 2.7×10⁹ | 7.9×10¹¹ | 4.0×10¹⁰ | 4.0×10¹⁰ |
| Blocking resistance | ○ | ○ | ○ | ○ | ○ | ○ | ○ | ○ | ○ | ○ | ○ | ○ |
| Transparency as haze value (%) | 8.5 | 9.8 | 9.1 | 98.5 | 2.4 | 5.2 | 2.1 | 4.3 | 13.2 | 99.6 | 9.5 | 9.0 |
| Wetting tension (mN/m) | 42 | 41 | 42 | 42 | 41 | 42 | 39 | 42 | 43 | 38 | 42 | 42 |
| Anti-fogging property | ○ | ○ | ○ | | ○ | ○ | - Δ | ○ | ○ | - | ○ | ○ |
| Printability as ink adhesion | ○ | ○ | ○ | ○ | ○ | ○ | ○ | ○ | ○ | ○ | ○ | ○ |
| Impact resistance as impact (N · m/mm) | 3.5 | 3.1 | 3.9 | 3.6 | 2.0 | 3.9 | 3.6 | 4.1 | 3.2 | 3.0 | 3.4 | 2.9 |
| Total plant-derived content in sheet (mass%) | 79.6 | 83.2 | 25.2 | 66.0 | 62.8 | 85.3 | 90.0 | 62.5 | 84.2 | 42.3 | 79.6 | 79.6 |

**[Table 1-3]**

| | | | Comparative example 1 | Comparative example 2 | Comparative example 3 | Comparative example 4 | Comparative example 5 | Comparative example 6 | Comparative example 7 | Comparative example 8 | Comparative example 9 | Comparative example 10 |
|---|---|---|---|---|---|---|---|---|---|---|---|---|
| Layer A | polylactic acid | material used | PLA-1 | PLA-1 | PLA-1 | PLA-1 | PLA-1 | PLA-1 | PLA-1 | PLA-1 | - | PLA-1 |
| | | content (mass%) | 91 | 91 | 91 | 91 | 91 | 91 | 91 | 91 | - | 91 |
| | poly(meth)acrylat e based resin | material used | - | - | - | - | - | - | - | - | - | - |
| | | content (mass%) | - | - | - | - | - | - | - | - | - | - |
| | impact strength modifier | material used | SP-2 | SP-2 | SP-2 | SP-2 | SP-2 | SP-2 | SP-2 | SP-2 | - | SP-2 |
| | | content (mass%) | 9 | 9 | 9 | 9 | 9 | 9 | 9 | 9 | - | 9 |
| | ionic surface active agent | material used | - | - | - | - | - | - | - | ISA-1 | - | - |
| | | content (mass%) | - | - | - | - | - | - | - | 1.3 | - | - |
| | nonionic surface active agent | material used | - | - | - | - | - | - | - | NISA-1 | - | - |
| | | content (mass%) | - | - | - | - | - | - | - | 0.2 | - | - |
| | other component | material used | - | - | - | - | - | - | - | - | - | - |
| | | content (mass%) | - | - | - | - | - | - | - | - | - | - |
| Layer B | poly(meth)acrylat e based resin | material used | PM-1 | PM-1 | PM-1 | PM-1 | PM-1 | PM-1 | PM-1 | - | PM-1 | PM-1 |
| | | content (mass%) | 55 | 55 | 55 | 35 | 99.6 | 55 | 55 | - | 55 | 55 |
| | polylactic acid | material used | PLA-1 | PLA-1 | PLA-1 | PLA-1 | - | PLA-1 | PLA-1 | - | PLA-1 | PLA-1 |
| | | content (mass%) | 33 | 31.5 | 31 | 51.5 | - | 33.3 | 34 | - | 31.5 | 33 |
| | impact strength modifier | material used | SP-2 | SP-2 | SP-2 | SP-2 | - | SP-2 | SP-2 | - | SP-2 | SP-2 |
| | | content (mass%) | 9 | 9 | 9 | 9 | - | 9 | 9 | - | 9 | 9 |
| | ionic surface active agent | material used | - | ISA-1 | ISA-1 | ISA-1 | ISA-1 | ISA-1 | ISA-1 | - | ISA-1 | - |
| | | content (mass%) | - | 1.5 | 2.0 | 1.3 | 0.3 | 2.6 | 0.9 | - | 1.3 | - |
| | nonionic surface active agent | material used | - | - | - | NISA-1 | NISA-1 | NISA-1 | NISA-1 | - | VISA-1 | - |
| | | content (mass%) | - | - | - | 0.2 | 0.1 | 0.1 | 1.1 | - | 0.2 | - |
| | other component | material used | S-MB | S-MB | S-MB | S-MB | - | - | - | - | S-MB | S-MB |
| | | content (mass%) | 3 | 3 | 3 | 3 | - | - | - | - | 3 | 3 |
| Coating agent | | coating material used | - | - | - | - | - | - | - | - | - | AS-1 |
| | | coating weight (g/m²) | - | - | - | - | - | - | - | - | - | 0.05 |
| Layer structure (example: 3 layer structure of layer B/layer A/layer A is shown as B/A/B.) | | | B/A/B | B/A/B | B/A/B | B/A/B | B/A/B | B/A/B | B/A/B | A | B | B/A/B |
| Layer thickness ratio | | | 1/8/1 | 1/8/1 | 1/8/1 | 1/8/1 | 1/8/1 | 1/8/1 | 0.5/9/0.5 | - | - | 1/8/1 |
| Sheet thickness (mm) | | | 0.30 | 0.30 | 0.30 | 0.30 | 0.30 | 0.30 | 0.30 | 0.30 | 0.30 | 0.30 |

**[Table 1-4]**

| | Comparative example 1 | Comparative example 2 | Comparative example 3 | Comparative example 4 | Comparative example 5 | Comparative example 6 | Comparative example 7 | Comparative example 8 | Comparative example 9 | Comparative example 10 |
|---|---|---|---|---|---|---|---|---|---|---|
| Content of poly(meth)acrylate based resin in composition (B) (mass%) | 55.0 | 55.0 | 55.0 | 35.0 | 99.6 | 55.0 | 55.0 | - | 55.0 | 55.0 |
| Mass ratio of surface active agent in composition (B) | - | - | - | 6.5 | 3.0 | 26.0 | 0.8 | - | 6.5 | - |
| = ionic surface active agent (mass%) / nonionic surface active agent (mass%) | | | | | | | | | | |
| Content of surface active agent in composition (B) (mass%) | 0.0 | 1.5 | 2.0 | 1.5 | 0.4 | 2.6 | 2.0 | - | 1.5 | 0.0 |
| = ionic surface active agent (mass%) + nonionic surface active agent (mass%) | | | | | | | | | | |
| Content of impact resistant agent in the the composition (B) (mass%) | 9 | 9 | 9 | 9 | 0 | 9 | 9 | - | 9 | 9 |
| Heat resistance as heat resistant temperature (°C) | 70 | 70 | 70 | 50 | 75 | 70 | 70 | 50 | 70 | 70 |
| Antistatic property as surface specific resistance (Ω/□) | 2.3×10¹⁴ | 1.9×10¹³ | 1.5×10¹⁰ | 2.3×10¹⁰ | 9.4×10¹³ | 3.6×10⁹ | 6.7×10¹⁰ | 4.1×10¹⁰ | 4.0×10¹⁰ | 8.8×10¹⁰ |
| Blocking resistance | × | × | ○ | × | × | ○ | ○ | × | ○ | ○ |
| Transparency as haze value (%) | 5.4 | 7.8 | 10.6 | 4.3 | 2.8 | 13.4 | 10.2 | 3.0 | 4.3 | 5.5 |
| Wetting tension (mN/m) | 38 | 38 | 41 | 42 | 38 | 42 | 41 | 42 | 42 | 41 |
| Anti-fogging property | × | Δ | Δ | ○ | × | ○ | ○ | ○ | ○ | ○ |
| Printability as ink adhesion | ○ | ○ | ○ | ○ | × | × | × | ○ | ○ | × |
| Impact resistance as impact (N · m/mm) | 3.6 | 3.4 | 3.3 | 3.5 | 1.8 | 3.8 | 3.9 | 2.8 | 2.8 | 3.6 |
| Total plant-derived content in sheet (mass%) | 79.9 | 79.6 | 79.5 | 83.6 | 72.8 | 79.5 | 79.6 | 91.0 | 34.2 | 79.9 |

The polylactic acid based resin sheets prepared in Examples 1 to 12 had, at all levels, high heat resistance, antistatic property, ink adhesion, and blocking resistance. In particular, those obtained in Examples 1, 2, 3, 5, 6, 8, 11, and 12 had high anti-fogging property in addition to high antistatic property, ink adhesion, and blocking resistance. At the levels 4 and 10, white moldings were obtained and, though not examined in terms of anti-fogging property, the sheets were high in blocking resistance, and appeared to serve favorably as material for producing products by stacking cut sheets, such as white containers and cards. At the level 9, the sheet had a high plant-derived content and heat resistance, though slightly inferior in transparency, and it appeared to serve favorably as material for lids of beverage containers having an environment load reduction feature as a value added.

Compared to these, the sheets obtained in Comparative examples 1, 2, and 5 were inferior in antistatic property, and significantly different from those obtained in Examples. The sheets obtained in Comparative examples 3, 6, and 7 were so inferior in transparency that they were not suitable as material for transparent containers, and significantly different from those obtained in Examples. Furthermore, the sheets obtained in Comparative examples 4 and 8 were so inferior in heat resistance that they were not suitable as material for moldings and had problems such as suffering from blocking after heat treatment. The sheet obtained in Comparative example 10 was inferior in ink adhesion and significantly different from those obtained in Examples The sheet obtained in Comparative example 9 had heat resistance, antistatic property, ink adhesion, and blocking resistance, but low in plant-derived content particularly when compared with the relatively high heat resistance, and failed to have a significant value added as compared to the sheets obtained in Examples.

## Claims

1. A polylactic acid based resin sheet having a laminated structure comprising a layer A formed of a composition (A) containing polylactic acid and a layer B formed of a composition (B) containing a poly(meth)acrylate based resin, an ionic surface active agent, and a nonionic surface active agent, the layer B being the outermost layer at at least one surface of the sheet, the poly(meth)acrylate based resin accounting for 50 mass% or more and 99.5 mass% or less of the entire 100 mass% of the composition (B), and the ionic surface active agent and nonionic surface active agent in the composition (B) having a mass ratio as follows: 2 ≤ ionic surface active agent / nonionic surface active agent ≤ 25.

2. A polylactic acid based resin sheet as set forth in claim 1, wherein the ionic surface active agent has a sulfo group.

3. A polylactic acid based resin sheet as set forth in either claim 1 or 2, wherein the nonionic surface active agent is at least one selected from the group consisting of the compounds listed below:
Group of compounds: aliphatic alkanol amide, polyglycerin fatty acid ester, higher alcohol (i), alkyl phenol (ii), fatty acid ester (iii), aliphatic amine (iv), aliphatic amide (v), polypropylene glycol (vi), sorbitan fatty acid ester (vii), and ethylene oxide adducts of (i) to (vii).

4. A polylactic acid based resin sheet as set forth in any one of claims 1 to 3, wherein the total quantity of the ionic surface active agent and nonionic surface active agent accounts for 1 mass% or more and 5 mass% or less of the entire 100 mass% of the composition (B).

5. A polylactic acid based resin sheet as set forth in any one of claims 1 to 4 that has a haze value of 10% or less.

6. A polylactic acid based resin sheet as set forth in any one of claims 1 to 5 that has a wetting tension of 40 mN/m or more (measured with JIS-K 6768(1999)).

7. A polylactic acid based resin sheet as set forth in any one of claims 1 to 6 wherein an impact strength modifier is contained at 2 mass% or more and 20 mass% or less of the entire 100 mass% of the composition (B).

8. A polylactic acid based resin sheet as set forth in any one of claims 1 to 7, wherein the polylactic acid contained in the composition (A) is a stereocomplex polylactic acid.

9. A molded product produced from a polylactic acid based resin sheet as claimed in any one of claims 1 to 8.

## Patentansprüche

1. Polymilchsäure-basierte Harzplatte mit einer laminierten Struktur, umfassend eine Schicht A, die aus einer Polymilchsäure enthaltenden Zusammensetzung (A) ausgebildet ist, und eine Schicht B, die aus einer ein Poly(meth)acrylatbasiertes Harz enthaltenden Zusammensetzung (B) ausgebildet ist, ein ionisches oberflächenaktives Agens und ein nicht-ionisches oberflächenaktives Agens,
wobei die Schicht B die äußerste Schicht auf mindestens einer Oberfläche der Platte ist,
wobei das Poly(meth)acrylat-basierte Harz 50 Massen-% oder mehr und 99,5 Massen-% oder weniger der gesamten 100 Massen-% der Zusammensetzung (B) ausmacht, und
wobei das ionische oberflächenaktive Agens und nicht-ionische oberflächenaktive Agens in der Zusammensetzung (B) ein Massenverhältnis wie folgt besitzen: 2 ≤ ionisches oberflächenaktives Agens / nicht-ionisches oberflächenaktives Agens ≤ 25.

2. Polymilchsäure-basierte Harzplatte gemäß Anspruch 1, wobei das ionische oberflächenaktive Agens eine Sulfo-Gruppe besitzt.

3. Polymilchsäure-basierte Harzplatte gemäß einem der Ansprüche 1 oder 2, wobei das nicht-ionische oberflächenaktive Agens mindestens eines ist, welches aus der Gruppe bestehend aus den Verbindungen, welche im Folgenden aufgelistet sind, ausgewählt ist:
Gruppe von Verbindungen: aliphatisches Alkanolamid, Polyglycerinfettsäureester, höherer Alkohol (i), Alkylphenol (ii), Fettsäureester (iii), aliphatisches Amin (iv), aliphatisches Amid (v), Polypropylenglykol (vi), Sorbitanfettsäureester (vii), und Ethylenoxidaddukte von (i) bis (vii).

4. Polymilchsäure-basierte Harzplatte gemäß einem der Ansprüche 1 bis 3, wobei die Gesamtmenge des ionischen oberflächenaktiven Agens und nicht-ionischem oberflächenaktiven Agens 1 Massen-% oder mehr und 5 Massen-% weniger der gesamten 100 Massen-% der Zusammensetzung (B) ausmacht.

5. Polymilchsäure-basierte Harzplatte gemäß einem der Ansprüche 1 bis 4, welche einen Trübungswert von 10 % oder weniger aufweist.

6. Polymilchsäure-basierte Harzplatte gemäß einem der Ansprüche 1 bis 5, welche eine Benetzungsspannung von 40 mN/m oder mehr (gemessen mit JIS-K 6768(1999)) besitzt.

7. Polymilchsäure-basierte Harzplatte gemäß einem der Ansprüche 1 bis 6, wobei ein Modifikator der Schlagzähigkeit zu 2 Massen-% oder mehr und 20 Massen-% oder weniger der gesamten 100 Massen-% der Zusammensetzung (B) enthalten ist.

8. Polymilchsäure-basierte Harzplatte gemäß einem der Ansprüche 1 bis 7, wobei die in der Zusammensetzung (A) enthaltene Polymilchsäure eine stereokomplexe Polymilchsäure ist.

9. Formteil, hergestellt aus einer Polymilchsäurebasierten Harzplatte gemäß einem der Ansprüche 1 bis 8.

## Revendications

1. Feuille de résine à base d'acide polylactique ayant une structure stratifiée qui comprend une couche A constituée d'une composition (A) contenant l'acide polylactique et une couche B constituée d'une composition (B) contenant une résine à base de poly(méth)acrylate, un agent tensioactif ionique, et un agent tensioactif non ionique,
la couche (B) étant la couche la plus à l'extérieur sur au moins une surface de la feuille,
la résine à base de poly(méth)acrylate représentant 50 % en poids ou plus et 99,5 % en poids ou moins des 100 % en poids de la composition (B), et
l'agent tensioactif ionique et l'agent tensioactif non ionique dans la composition (B) ayant un rapport en poids comme suit : 2 ≤ agent tensioactif ionique/agent tensioactif non ionique ≤ 25.

2. Feuille de résine à base d'acide polylactique selon la revendication 1, dans laquelle l'agent tensioactif ionique contient un groupe sulfo.

3. Feuille de résine à base d'acide polylactique selon l'une ou l'autre des revendications 1 ou 2, dans laquelle l'agent tensioactif non ionique est au moins un agent tensioactif choisi dans le groupe constitué par les composés énumérés ci-dessous :
Groupe de composés : alcanolamide aliphatique, ester d'acide gras de polyglycérol, alcool supérieur (i), alkylphénol (ii), ester d'acide gras (iii), amine aliphatique (iv), amide aliphatique (v), polypropylène glycol (vi), ester d'acide gras de sorbitan (vii), et produits d'addition d'oxyde d'éthylène de (i) à (vii).

4. Feuille de résine à base d'acide polylactique selon l'une quelconque des revendications 1 à 3, dans laquelle la quantité totale d'agent tensioactif ionique et d'agent tensioactif non ionique représente 1 % en poids ou plus et 5 % en poids ou moins des 100 % de la composition (B).

5. Feuille de résine à base d'acide polylactique selon l'une quelconque des revendications 1 à 4 qui a une valeur de voile de 10 % ou moins.

6. Feuille de résine à base d'acide polylactique selon l'une quelconque des revendications 1 à 5 qui a une tension de mouillage (mesurée selon JIS-K 6768(1999)) de 40 mN/m ou plus.

7. Feuille de résine à base d'acide polylactique selon l'une quelconque des revendications 1 à 6 dans laquelle un agent de modification de la résistance aux chocs est contenu à raison de 2 % en poids ou plus et 20 % en poids ou moins des 100 % en poids de la composition (B).

8. Feuille de résine à base d'acide polylactique selon l'une quelconque des revendications 1 à 7, dans laquelle l'acide polylactique contenu dans la composition (A) est un acide polylactique stéréocomplexe.

9. Produit moulé obtenu à partir d'une feuille de résine à base d'acide polylactique selon l'une quelconque des revendications 1 à 8.
